**Europäisches Patentamt**

**European Patent Office**

**Office européen des brevets**

(11) Publication number : **0 494 829 A2**

# EUROPEAN PATENT APPLICATION

(21) Application number : **92400061.5**

(51) Int. Cl.⁵ : **G06K 7/10**

(22) Date of filing : **10.01.92**

(30) Priority : **11.01.91 US 639972**
**07.10.91 US 772077**

(43) Date of publication of application :
**15.07.92 Bulletin 92/29**

(84) Designated Contracting States :
**CH DE ES FR GB IT LI NL**

(71) Applicant : **SAPHIKON, INC.**
**33 Powers Street**
**Milford, New Hampshire 03055 (US)**

(72) Inventor : **Jandl, William K.**
**5 Fieldstone Drive**
**Amherst, New Hampshire 03031 (US)**
Inventor : **Reed, Frank A.**
**15 Daniel Webster Drive**
**Hudson, New Hampshire (US)**

(74) Representative : **Mongrédien, André et al**
**c/o SOCIETE DE PROTECTION DES**
**INVENTIONS 25, rue de Ponthieu**
**F-75008 Paris (FR)**

(54) **Laser scanning window.**

(57) A sapphire-glass window for a laser scanner is mounted in a rigid plastic window frame, the frame overlies the edges of a thin sapphire sheet which is laminated to a thicker glass window. A flexible seal is provided around the edge of the window frame and the thus assembled frame can be snapped into place in a merchandise supporting structure. The arrangement gives a strong, scratch resistant and liquid tight laser window.

EP 0 494 829 A2

The present invention is directed to sapphire windows for use with laser scanning beams which read bar codes on merchandise, particularly at check-out counters in retail stores such as grocery stores, etc. Sapphire has been developed as a highly scratch resistant surface which can be laminated to a sheet of glass for positioning over a detector which can read laser beams reflected from the bar codes to provide digital signals to identify a bar code passing over the window.

Such windows are subjected to considerable abuse and must be highly scratch resistant, otherwise the accuracy of the readings is drastically impaired. They also must be subject to easy cleaning of spills of products passing over the windows. For instance, milk and other materials leaking from containers can be readily wiped off the window to eliminate the necessity of extensive down time to permit cleaning.

Presently, many of the laser scanning systems on the market such as those produced by Spectra Physics (in particular, their models 750SL, 860SLS, 850SLE, FREEDOM PLUS), include a glass window and a cassette window frame that fits over the glass window when the window has been positioned flush with a merchandise supporting structure such as a table or the like. (see U. S. Patent 5,005,329 issued March 9, 1991) The present invention is particularly designed as a replacement cassette wherein a liquid-tight sealed sapphire window is carried by a cassette which may be snapped into place to replace the easily damaged glass window normally supplied with this particular type of laser scanner.

The present commercial sapphire windows include a glass backing sheet carrying a sapphire layer on the order of 30-40 thousandths of an inch thick. This window extends through an opening in a frame and the surface of the sapphire is positioned on the order of 10 thousandths of an inch below the surface of the frame to prevent catching of articles passing over the window on the edge of the frame or the edge of the sapphire. To manufacture such a product, it is necessary that the sapphire be of a carefully controlled thickness on the order of plus or minus a few thousandths of an inch and all of the sapphire edges and corners must be free of defects which might trap dirt and give an unsatisfactory appearance. These stringent requirements on the sapphire sheet, which is extremely hard and must be ground to its final dimensions, require expensive manufacturing techniques and a high rate of rejection.

BRIEF SUMMARY OF PRESENT INVENTION

The present invention has several objectives. One is to provide a single cassette containing a permanently mounted sapphire window which can be easily snapped into place to replace the two piece glass window picture frame construction of prior art laser scanner windows. The design of the present invention also gives a novel structure wherein thickness of the sapphire window is not critical and the problems of edge chipping and corner cracking during grinding are eliminated as significant factors in the manufacturing process.

In the present invention, a sapphire window is ground so that two opposite surfaces are roughly parallel with a thickness on the order of .030 inch plus or minus .010 inch preferably between .020 and .040 inch thick. This is a single crystal alumina sheet, preferably the two surfaces are (1120) family of plane within ± 5 degrees, and the crystallographic C-axis is perpendicular to the long edge within ± 5 degrees. It is polished to a 2 microinch surface. Internal voids and inclusions should not exceed 250 microns in any direction. The two surfaces should be flat within 10 waves per inch and preferably parallel within .003 inch. The above requirements are not exceedingly rigid, as long as the critical edge portions and corners, where most chipping occurs, can be ignored.

In the present invention, the sapphire window is secured to a glass plate by an optically clear adhesive, such as epoxy, and the cured sandwich is then mechanically mounted in a plastic window frame, which has an opening sufficiently small so that at least 3 edges of the frame overlie the edge of the sapphire. Thus, as soon as a sapphire sheet has been ground to the point where the two surfaces are parallel and smooth, if it is at least less than .040 inches, it can then be mounted on the glass, it does not have to be further ground. With this arrangement, the edges of the frame completely overlie at least 3 edges and 4 corners of the sapphire window.

Another feature of the present invention involves the shape of the frame. The inner edge is beveled to provide a smooth transition for the edge of a package passing away from the sapphire window and onto the frame. It also makes a smooth transition which prevents trapping of food or dirt which would otherwise make maintenance of a clean window difficult and expensive.

This frame is preferably formed of rigid plastic and has two longitudinal downwardly extending cantilever flanges which grip opposite beveled edges of the glass sapphire composite window which allows the glass sapphire beveled edge to snap under the outer edge of the channel which then retains the glass tightly mounted in the plastic frame. This permits easy cleaning of the window to permit continued rapid and accurate operation of the laser scanning system. Additionally, a sealant can be used arount the edge of the glass, in which the sealant may be a RTV Silicone or other adhesive. The adhesive forms a permanent liquid tight seal between the composite glass sapphire sandwich and the edge of the plastic window frame.

## DETAILED DESCRIPTION OF THE INVENTION

To more fully understand the invention, reference should be had to the following detailed description taken in connection with the accompanying drawings wherein:

Figure 1 is a schematic, diagrammatic partially sectional view of one preferred form of the invention; and

Figure 2 is a plan view of the top of Figure 1.

Figure 3 is a front face view of the plastic frame without the glass-sapphire window mounted therein.

Figure 4 is a partially sectional side view of the frame.

Figure 4A, 4B and 5C are detailed sectional views along the sectional lines indicated showing actual dimensions, in inches, of a preferred structure.

Figure 5 is a rear view of the plastic frame.

Figure 6 shows another form of the invention.

Figure 7 shows still another feature of the invention.

Figure 8 is an enlarged sectional view of another preferred form of the channel members illustrated in Figures 4, 4A and 4B.

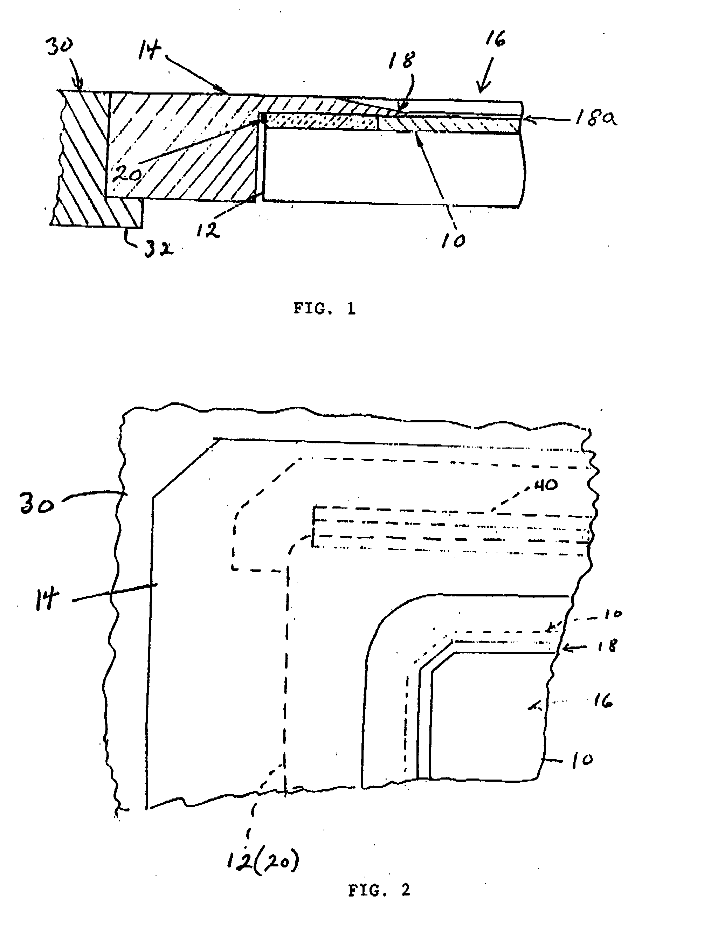

Referring now to Figures 1 and 2, the window comprises a sapphire sheet 10 carried by a glass sheet 12 mounted in a rigid plastic frame generally indicated at 14. The frame 14 is provided with a window generally indicated at 16 which is defined by inner edge 18 of the frame 14 as shown in detail in Figure 1. Inner edge 18 is tapered to an edge having a definable thickness 18a, on the order of 0.06 inch. It is also preferable that the corners of the window be slightly beveled as shown at 18b in Fig 2.

The window frame 14 is mounted in a merchandise supporting structure 30 constituting a check-out counter for example. A lip 32 of structure 30 engages the bottom surface of frame 14.

In one preferred embodiment of the invention, the sapphire window 10 is a single crystal of alumina having its top and bottom surfaces flat within 10 waves per inch and parallel within .003 T.I.R. The surfaces are preferably the (1120) family of planes within ± 5 degrees and the crystallographic C-axis is perpendicular to the long edge within ± 5 degrees. The surface of the sapphire is preferably polished to a 2 microinch finish and all edges and sharp corners are ground. All planes should be perpendicular within 5 degrees, internal voids and inclusions should not exceed 250 microns in any direction.

The glass substrate is preferably high quality window glass with optical transmission to be 87 percent minimum, measured normal to the surface at 6328 (± 25) angstroms. Top and bottom surfaces should be flat within 10 waves per inch, parallel within .005 T.I.R. using optical flats. The surfaces of the glass preferably have a 2 microinch finish. The plastic frame 14 is preferably formed of ABS Black UL-94VO Cert.

In assembly of the window, the glass and sapphire sheet are united by a thin optically clear epoxy resin normally used for laminating safety glass. The sealant used at 20 for sealing the laminate to the plastic frame is preferably RTV Silicone. In assembling the product of the present invention, the sapphire is mounted on the glass, the laminating sealant is cured, and then a suitable amount of sealant 20 is placed at the edge of the glass to fill the space between the plastic frame 14 and the surface of the glass 12. This will permit a fairly large variation in the thickness of the sapphire sheet 10 while still maintaining a strong mechanically sealed bond between the sapphire glass laminate and the plastic frame.

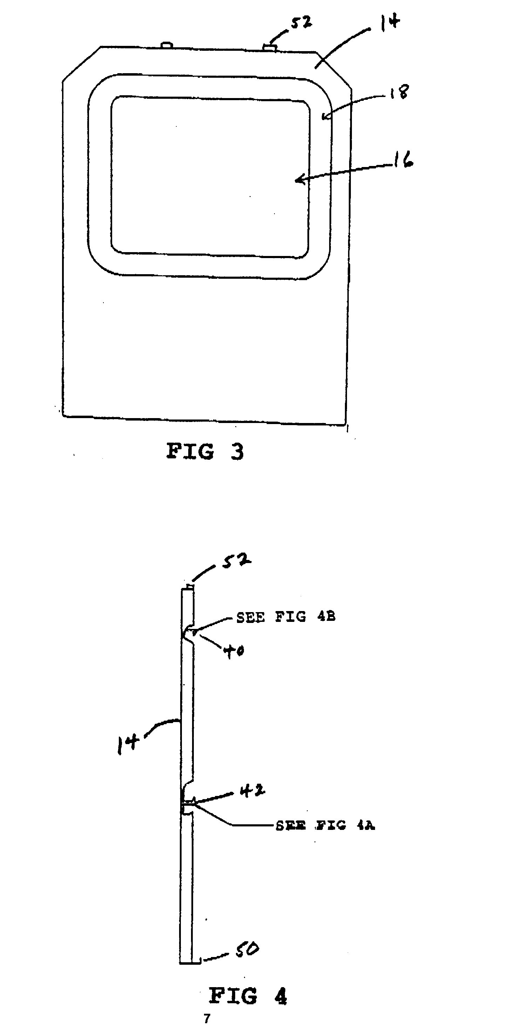

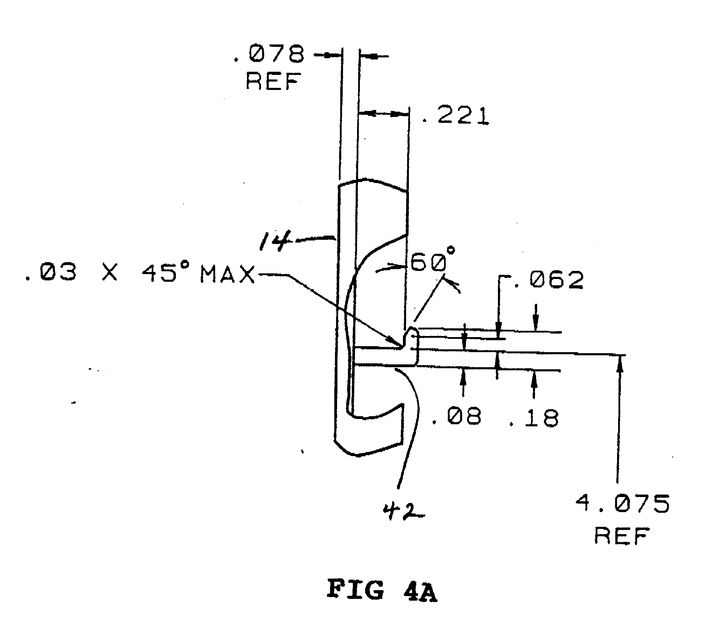

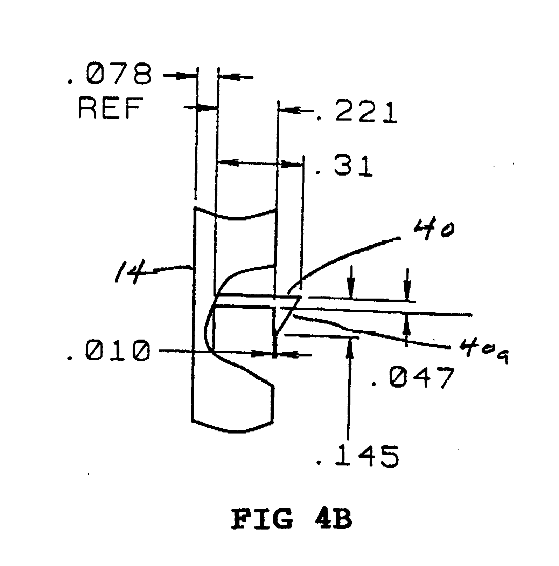

Referring now to Figure's 3 through 5, the details of the rigid plastic frame are described more fully. The frame 14, with its beveled edge surrounding the opening 16, is of flat construction with channel members 40 and 42 along the bottom and top edges of the window opening 16 for holding the glass-sapphire composite. As can be seen particularly in Figure 4B the top channel member 40 is relatively thin and has a tapered point 40A which acts as a cam so that, as the glass-sapphire laminate is pushed down against this tapered end 40A, it will move the channel member outwardly and allow the edge of the glass to slide under the tapered end 40A which then locks the glass in place. This also applies a compressive force to the sealant 20 between the glass and the edge of the frame. The lower channel 42 is relatively rigid and preferably does not move during insertion of the glass edge into this channel 42.

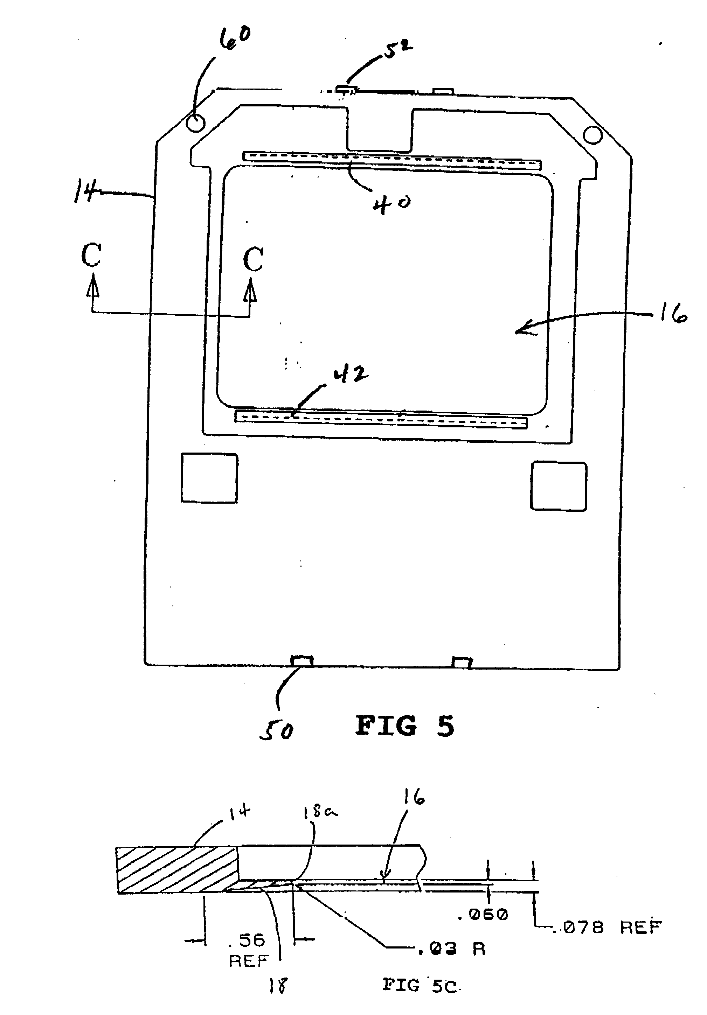

There are several other features of this construction that should be noted. The relationship of the channel 42 to the opening 16 is most clearly shown in Figure 5 which is a bottom view of the frame. For supporting the frame 14 in the merchandise supporting structure 30 this structure has a lip 32 (see Figure 1). For locking the frame on the support there are two bosses 52 at the top of the frame and a latch 50 which extends inwardly from a skirt 51 at the bottom of the frame. The bosses 52 and the latch 50 prevent vertical movement of the frame 14 with respect to support 30. To prevent lateral movement of the frame, holes 60 in the bottom of the frame engage suitable bosses (not shown) carried by the lip 32. Thus when the frame is snapped into place, it is firmly held. If desired, a gasket (not shown) may be provided at the edge of the frame to seal the opening between the frame and the support structure 30.

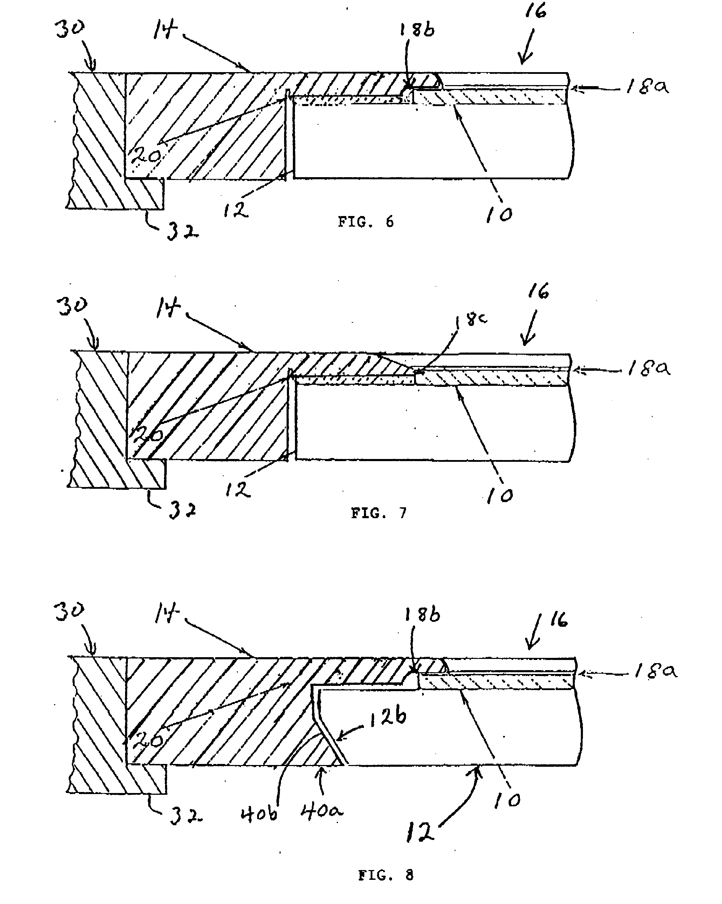

Several additional embodiments of the invention are illustrated in Figures 6 and 7, these embodiments being particularly suited for piece to piece replacement of the upper glass window and frame shown in the Schorr patent 5,005,329. In this embodiment, the cartridge assembly 20 of Schorr corresponds to the frame 14 of the present invention. With this arrangement it is desirable to eliminate the u-shaped channels 40 and 42 for holding the glass sapphire window in the frame 14. For this purpose the edges of the glass are secured in the frame 14 by a permanent adhesive, preferably a quick setting cyanoacrylate.

Referring now to Figures 6 and 7, several preferred modifications of the invention are illustrated which are particularly suited for the use of a quick setting permanent adhesive.

In Figure 6, for example, the tapered lip 18, which overlies the edge of sapphire sheet 10 (laminated to the glass plate 12), is slightly undercut at 18b so that the spacing between the edge face of the glass and the bottom face of the frame 14 is considerably reduced to accomodate a very thin layer of fast setting permanent adhesive.

In Figure 7, the lip 18 is extended to a narrow point and the relieved portion 18b is removed. Thus, the end of the lip 18a on the lip 18c abuts the edge of the sapphire sheet 10. Again, the spacing between the supporting glass plate and the frame 14 is extremely narrow to provide for the permanent adhesive.

This Figure 7 structure is particularly useful for the trailing edge of the window, i.e. that edge across which the merchandise is dragged during the scanning operation. Since the end 18c is flush with the top of sapphire layer 10, the object being scanned can easily pass over this transition from sapphire to plastic with no catching of the object.

In a preferred embodiment of the invention the adhesive employed is a cyanoacrylate having extremely fast curing properties. A preferred type is Loctite[R] Prism 410 which is ethylcyanoacrylate in the form of a black liquid having the following properties:

1. Specific gravity at 25°C of 1.05,
2. Viscosity @ 25°C, mPa.s: Brookfield RVT, Spindle 2 @ 2.5 rev/min: 3500.
3. Flash point above 80°C,
4. Vapor pressure of less than 1 mbar.

A very thin layer of this cyanoacrylate adhesive (1 freefalling drop spreads over 1 square inch) has a very rapid cure time of 1 or 2 minutes.

With this modified system as shown in Figures 6 and 7, a frame 14 containing permanently adhesively secured composite glass sapphire window 10/12 can be snapped in place of the cartridge assembly 20 shown in the Schorr patent without replacing any of the other elements; even the seal 130 of Schorr can be left in place.

Since the sapphire glass window is an extremely rugged scanning surface which can withstand literally millions of scans, it will outlast the material of the frame 14, even in those cases where the frame is made of metal. The sapphire glass window is much more expensive than the frame and can be replaced in a new frame by the use of a suitable solvent for removing the cyanoacrylate adhesive or other permanent adhesive employed. This replacement is not normally something done by the customer but would be done by the original manufacturer of the assembly 10, 12, 14.

In still another embodiment of the invention, the channels 40 and 42 are modified as illustrated in Figure 8. In this embodiment, the inner edge 18 of frame 14 preferably has the structure of Figure 6 with a deep groove 18B which is about equal to the thickness of sapphire sheet 10. The channels 40 and 42 are both made with wedge shaped channel (see 40A in Figure 8). The window frame is sufficiently flexible, even though a hard plastic is used, so that it can be bent slightly around an axis parallel to channels 40A to spread edges 40B apart to permit the edge 12A of glass sheet 12 to pass under edge 40B. As can be seen from Figure 8, the edge 12B of sheet 12 is tapered to match the taper 40A on the channel 40. In Figure 8, the spacing between the window 12 and frame 14 is exaggerated for purposes of illustration. The coaction of these tapers tends to force the glass-sapphire window against the frame 14. When the cassette is installed in a laser scanner of the type shown in the above Schorr patent '329, the sel 130 of the Schorr construction increases the pressure between the glass-sapphire window and the frame 14.

Other modifications of the invention will be apparent to one skilled in the art without departing from the spirit of the invention.

## Claims

1. A sapphire window assembly for a laser scanner having a merchandise supporting structure providing a smooth surface having an opening therein, a plastic window frame having an opening which overlays a composite glass-sapphire window, said window comprising a glass sheet which supports a thinner sapphire surface layer bonded thereto, said sapphire surface layer being smaller in area than said glass sheet, said opening being smaller in area than said sapphire surface, a seal around the edge of the window frame defining the opening between the frame and the window fastener, said seal extending between the frame and that portion of the glass plate which is not covered by the sapphire surface, and holding said window assembly in said structure.

2. A sapphire window assembly for a laser scanner having a merchandise supporting structure providing a smooth surface having an opening therein, a plastic window frame having an opening which overlays a composite glass-sapphire window, said window comprising a glass sheet which supports a thinner sapphire surface layer bonded thereto, said sapphire surface layer being smaller in area than said glass sheet, said opening being smaller in area than said sapphire surface, a seal around the edge of the window frame defining the opening between the frame and the window fastener, at least a portion of said seal extending between the frame and that portion of the glass plate which is not covered by the sapphire surface, means for holding said glass-sapphire window in said window frame comprising a channel member for receiving one edge of said glass sheet, and a latching channel member bearing against the opposite edge of said glass sheet and locking said glass sheet in said window assembly.

3. The assembly of claim 1 wherein, the glass sapphire window is retained in said window frame by means of u-shaped elements engaging opposite edges of the glass-sapphire window, one of said u-shaped elements being sufficiently flexible to permit bending of the flexible element outwardly in the plane of the glass sapphire window and thus allowing snapping of the glass sapphire window under the outer edge of said flexible element.

4. The assembly of claim 1 wherein the rear surface of the window frame has a groove along its inner edge to receive the edge of the sapphire sheet to reduce the gap between the facing surfaces of the frame and the glass sheet.

5. The assembly of claim 1 wherein one edge of the window frame abuts an edge of the sapphire sheet.

6. A sapphire window assembly for a laser scanner having a merchandise supporting structure providing a smooth surface having an opening therein, a plastic window frame having an opening which overlays a composite glass-sapphire window, said window comprising a glass sheet which supports a thinner sapphire surface layer bonded thereto, said sapphire surface layer being smaller in area than said glass sheet, said opening being smaller in area than said sapphire surface, means for holding said glass-sapphire window in said window frame comprising a channel member for receiving one edge of said glass sheet, and a latching channel member bearing against the opposite edge of said glass sheet and locking said glass sheet in said window assembly, said channel members having wedge shaped edges which force said glass surface against the back of the window frame, said plastic window frame being sufficiently flexible so that on bending the frame, with a convex curve at the rear of the frame, the wedge shaped edges of the channel spread apart to permit insertion of the rigid glass-sapphire window, said window having complementary tapered edges matching the wedges of the channel members.

7. The assembly of claim 6 wherein the rear surface of the window frame has a groove along its inner edge to receive the edge of the sapphire sheet to reduce the gap between the facing surfaces of the frame and the glass sheet.

8. The assembly of claim 6 wherein one edge of the window frame abuts an edge of the sapphire sheet.

FIG. 1

FIG. 2

FIG 3

FIG 4

7

.078
REF

.221

14

.03 X 45° MAX

60°

.062

.08   .18

42

4.075
REF

FIG 4A

FIG 4B

60
52
14
40
C C
16
42
50

**FIG 5**

14    18a    16

.060

.078 REF

.56
REF

18    .03 R

**FIG 5C**

FIG. 6

FIG. 7

FIG. 8